# EUROPÄISCHE PATENTSCHRIFT

(11) **EP 0 628 801 B1**
(45) Veröffentlichungstag und Bekanntmachung des Hinweises auf die Patenterteilung: **18.09.1996**
(21) Anmeldenummer: 94114412.3
(22) Anmeldetag: 19.01.1990
(51) Int. Cl.: G01M 3/32

(54) **Prüfkammer mit Spülmittel-Ablaufleitung**
Test container having channel for a rinsing agent
Chambre d'essai avec une conduite d'écoulement de produit de rincage

(30) Priorität: 27.01.1989 DE 3902435
(43) Veröffentlichungstag der Anmeldung: 14.12.1994
(62) Teilanmeldung aus: 90101074.4
(73) Patentinhaber: Lehmann, Martin, CH-5610 Wohlen 1 (CH)
(72) Erfinder: Lehmann, Martin, CH-5610 Wohlen 1 (CH)
(74) Vertreter: Troesch Scheidegger Werner AG

(56) Entgegenhaltungen:
- US-A- 3 949 598
- US-A- 4 667 506

## Beschreibung

Die vorliegende Erfindung betrifft eine Prüfkammer für die Dichteprüfung eines Behältnisses mit sich in einer Behältnisachsrichtung verkleinernden Aussenquerschnittsfläche, wobei die Prüfkammer einen verschliessbaren Hohlraum zur Aufnahme eines zu prüfenden Behältnisses aufweist, und eine Einrichtung zur Erstellung einer Druckdifferenz zwischen Behältnisinnerem und dem zwischen Hohlraumwandung und 3ehältnis gebildeten Behältnisaussenraum, als Anfangsbedingung, sowie eine Druckmesseinrichtung zur Messung einer von der Druckdifferenz und der Behältnisdichte abhängigen Druckgrösse.

Im weiteren umfasst die vorliegende Erfindung eine Anordnung mit einer Mehrzahl derartiger Prüfkammern und deren Anwendung für die Prüfung gefüllter und verschlossener Kunststoffbecher, wie von Joghurtbechern.

Verfahren zur Dichteprüfung, bei dem ein zu prüfendes Behältnis einer Druckdifferenz zwischen Innen- und Aussendruck als Anfangsbedingung unterworfen wird und aus einem zeitlichen Verlauf einer von dieser Druckdifferenz abhängigen Druckgrösse auf die Dichtheit des Behältnisses geschlossen wird, sind bekannt. Aus der DE-OS 24 47 578 ist beispielsweise ein derartiges Prüfverfahren bekannt, um die Leckage von Behältnissen in der Schweissnahtpartie derartiger Behältnisse zu prüfen. Hierzu wird das Behältnis, geöffnet, innen und, entlang wesentlichster Wandungsabschnitte, auch aussen aufgrund der Behältnisöffnung mit demselben Druck beaufschlagt, und es ist um die Schweissnaht herum ein vom genannten druckbeaufschlagten Volumen getrennter Prüfkanal vorgesehen. Es wird die zeitliche Entwicklung des Druckes im genannten Prüfkanal registriert als Mass für die Dichtheit der Schweissnaht.

Aus der DE-OS 21 15 563 ist es bekannt, Nahtstellen von mit Folien verschlossenen Behältnissen dadurch zu prüfen, dass mittels eines Dornes der Behältnisboden durchstochen wird und das Behältnisinnere druckbeaufschlagt wird. Aus Verfolgung des mit Zerstörung der Behältniswandung erstellten Behältnisinnendruckes wird auf dessen Dichte geschlossen.

Aus dem Artikel "Lecksuche mittels Differenzdruck-Messungen" von J.T. Furness, VFI 4/78, ist es allgemein bekannt, Behältnisse durch Beobachtung ihres Innendruckes oder ihres Aussendruckes auf Leckage zu prüfen. Dabei ist ausgeführt, dass, je kleiner ein Volumen ist, worin der messrelevante Druck verfolgt wird, desto grösser die leckagebedingte Druckänderungssensibilität wird.

Um im weiteren eine Verschmutzung der Prüfkammer mit Füllgut leckender Behältnisse leicht beheben zu können, wird gemäss Wortlaut von Anspruch 1 vorgeschlagen, in die Kammer eine dichtend verschliessbare Spülmittel-Ablaufleitung einmünden zu lassen, womit die Prüfkammer ohne weiteres gespült werden kann. Die Spülung erfolgt manuell, oder es kann, beispielsweise am Verschlussdeckel, eine dichtend verschliessbare Zuleitung mit endständiger Düse für Spülmittel vorgesehen sein, um die Prüfkammer bei Bedarf zu reinigen.

Bei Vorsehen der Prüfkammer mit einer Spülmittel-Ablaufleitung, die dichtend zu verschliessen ist, wird dabei bevorzugterweise das ohnehin beweglich in der Kammer vorgesehene Organ, nämlich der Auswurfkolben, dazu verwendet, die Leitung zu öffnen bzw. dichtend zu verschliessen, gemäss Wortlaut von Anspruch 2.

Diese Ausbildung wird bevorzugterweise gemäss Wortlaut von Anspruch 3 so realisiert, dass der Abschlusskolben einen Kolbenteller umfasst und die Leitung durch die dem Büchseninneren abgekehrte Seite des Kolbentellers geöffnet bzw. dichtend verschlossen wird, womit erreicht wird, dass während des Auswurfes eines eben geprüften Behältnisses die erwähnte Spülmittel-Ablaufleitung geöffnet wird und bei eingefahrenem Auswurfkolben, somit in Position, wie für die Dichteprüfung, dichtend verschlossen ist.

Eine Mehrzahl solcher Prüfkammern eignet sich ausgezeichnet, um zu einer Prüfanordnung gemäss Anspruch 3 vereinigt zu werden, um eine In-Linie-Prüfung von Behältnissen in der Produktion nach deren Verschliessen auszuführen. Wegen der kurzen Prüfzyklen mit der erfindungsgemässen Prüfkammer können damit sämtliche Behältnisse einer Produktionslinie auf Dichte geprüft werden, was gegenüber Stichprobenprüfungen wesentliche Vorteile mit sich bringt.

Eine derartige erfindungsgemässe Anordnung mehrerer erfindungsgemässer Prüfkammern wird bevorzugterweise als Karussell ausgebildet.

Die erfindungsgemässe Prüfkammer und mithin auch die erfindungsgemässe Anordnung mehrerer solcher Prüfkammern eignen sich insbesondere für die Prüfung gefüllter und verschlossener Kunststoffbecher, wie von Joghurtbechern.

Die Erfindung wird anschliessend beispielsweise anhand von Figuren erläutert.

Es zeigen:
- Fig. 1: schematisch eine Prüfkammer bekannter Art und ihre Verwendung zur Dichteprüfung verschlossener, gefüllter Behältnisse mit sich in einer Behältnisachsrichtung verkleinernder Querschnittsfläche,
- Fig. 2: schematisch, in analoger Darstellung zu Fig. 1, eine weitere Prüfkammer,
- Fig. 3: schematisch, in Längsschnittdarstellung, eine bevorzugte Ausführungsvariante einer erfindungsgemässen Prüfkammer für die Dichteprüfung becherartiger Behältnisse, wie von Joghurtbechern.

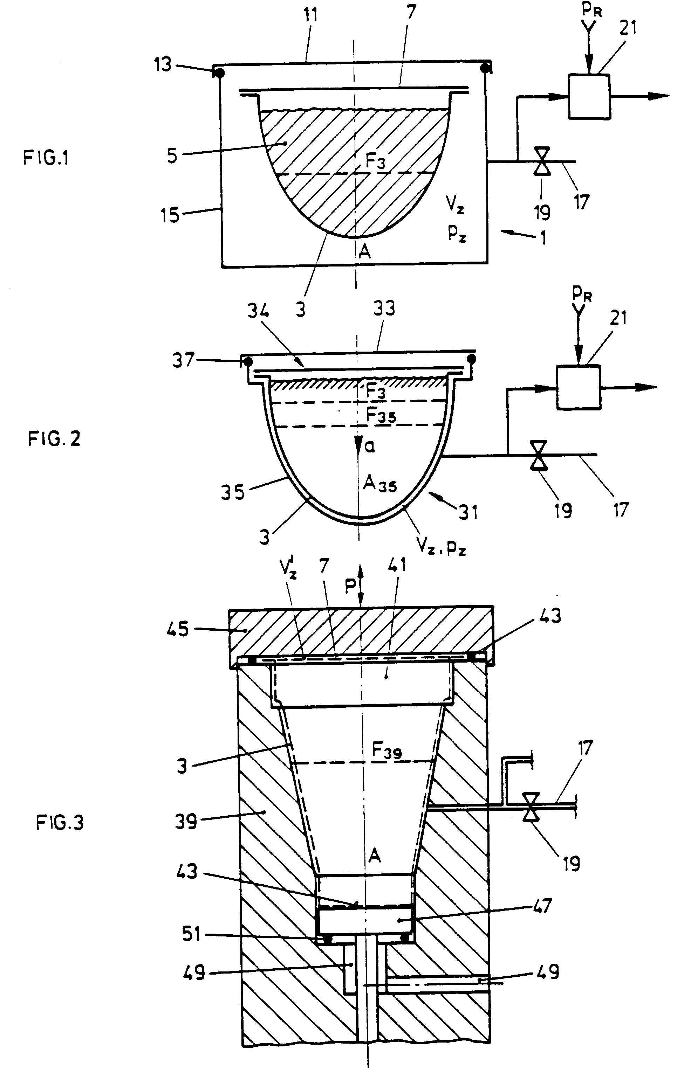

In Fig. 1 ist schematisch eine Prüfkammer 1 dargestellt, wie sie in bekannter Art und Weise auch für die Dichteprüfung verschlossener Behältnisse 3 verwendet wird, welche, in Richtung einer Behältnisachse A betrachtet, sich verkleinernde Querschnittsflächen F₃ aufweisen. Die Behältnisse 3 sind mit Füllgut 5 gefüllt und beispielsweise mit einer Deckfolie 7 verschlossen, welche an ihrer Peripherie mit dem Behältnis 3 verbunden, wie beispielsweise verklebt oder verschweisst sind. Beispielsweise kann es sich bei solchen Behältnissen um Kunststoffbecher handeln, welche mit einer Alufolie 7 verschlossen sind.

Zur Dichteprüfung werden diese Behältnisse 3 in die Prüfkammer 1 eingeführt, die darnach mittels eines Verschlussdeckels 11 und Dichtungen 13 verschlossen wird. Zwischen dem Behältnis 3 und der Prüfkammer, bestehend aus Verschlussdeckel 11 und Kammerbüchse 15, wird ein Zwischenvolumen V_{z} festgelegt, welches auf einen Prüfdruck p_{z} gelegt wird, der vom Druck innerhalb des Behältnisses 3 unterschiedlich ist.

Dies wird, wie in Fig. 1 schematisch angedeutet, über eine Druckbeaufschlagungsleitung 17 mit Ventil 19 realisiert. Nach Druckbeaufschlagung des Zwischenvolumens V_{z} wird das Ventil 19 geschlossen und die Entwicklung des Druckes p_{z} des Zwischenvolumens V_{z}, beispielsweise mittels z eines Drucksensors 21, registriert, bevorzugterweise als Differenzdrucksensor ausgebildet, welchem nebst dem Zwischenvolumendruck p_{z} ein Referenzdruck p_{R} zugeführt wird. Wird als Prüfdruck ein bezüglich des Behältnisinnendruckes kleinerer Druck an das Zwischenvolumen angelegt, so ergibt sich bei Leckage des Behältnisses 3 und nach Verschluss des Ventils 19 wegen des einsetzenden Druckausgleiches ein Druckanstieg im Zwischenvolumen V_{z} und umgekehrt bei Anlegen eines Prüfdruckes p_{z}, welcher grösser ist als der Behältnisinnendruck. Für das Anlegen des Prüfdruckes p_{z} an das Zwischenvolumen V_{z} muss Gasvolumen dem Zwischenvolumen V_{z} zu- oder von diesem Volumen abgeführt werden, dessen Menge desto grösser ist, je grösser das Zwischenvolumen V_{z} ist.

Das für dis Erstellen des Prüfdruckes p_{z} zu fördernde Gasvolumen wirkt sich, bei vorgegebenen Förderleistungen eines der Leitung 17 zugeschalteten Pump- oder Saugorgans (nicht dargestellt), direkt auf die Zeitspanne aus, welche zur Prüfdruckbeaufschlagung nötig ist: Je kleiner dieses Zwischenvolumen V_{z} ist, desto geringer wird die hierzu benötigte Zeit.

Im weiteren ist bei einer vorgegebenen Leckage, bei vorgegebenem Prüfdruck p_{z} und mithin vorgegebener Druckdifferenz von Zwischenvolumen V_{z} und Behältnisinnerem auch das durch das Leck pro Zeiteinheit strömende Gasvolumen gegeben, womit die als Leckagemass registrierte Druckänderung im Zwischenvolumen V_{z} in der Zeit desto grösser wird, je geringer das Zwischenvolumen V_{z} ist.

Um nun diesen Verhältnissen optimal Rechnung zu tragen, wird wie schematisch in Fig. 2 dargestellt, die Prüfkammer so ausgelegt, dass zwischen ihr und einem eingelegten, zu prüfenden Behältnis ein möglichst kleines Zwischenvolumen definiert wird. Die in Fig. 2 schematisch dargestellte, erfindungsgemässe Prüfkammer 31 umfasst eine einseitig offene Büchse 35 mit Oeffnung 34, wobei sich Querschnittsflächen F₃₅ der Büchse 35, betrachtet von der Oeffnung 34 her, verkleinern. Die Verkleinerung der Querschnittsfläche F₃₅ entlang der Achse A₃₅ entspricht dabei vorzugsweise der Verkleinerung der Querschnittsfläche F₃ eines in die Prüfkammer 31 einzulegenden, zu prüfenden Behältnisses 3, so dass die Wandung des Behältnisses 3 und die Innenwandung der Prüfkammer 31 bei eingelegtem Behältnis 3 in wesentlichen äquidistant zueinander liegen. Damit wird das Zwischenvolumen V_{z} minimal.

Auch an dieser Prüfkammer 31 ist ein Verschlussdeckel 33 vorgesehen, der mittels schematisch dargestellter Dichtungen 37 nach Einlegen des zu prüfenden Behältnisses 3 die Prüfkammer 31 dichtend verschliesst. Anlegen des Prüfdruckes und Registrierung des Druckverlaufes im Zwischenvolumen V_{z} erfolgt gleich, wie bereits anhand von Fig. 1 erläutert wurde.

In Fig. 3 ist eine bevorzugte Ausführungsvariante der erfindungsgemässen Prüfkammer schematisch dargestellt. Sie ist, als Beispiel, aufgebaut, um im wesentlichen kegelstumpfförmige Behältnisse 3, wie sie beispielsweise für Joghurt verwendet werden, auf Dichtheit zu prüfen.

Ein zu prüfendes Behältnis 3 mit Verschlussfolie 7 ist gestrichelt dargestellt. Die erfindungsgemässe Prüfkammer umfasst eine Büchse 39, welche entsprechend der Aussenkontur des Behältnisses 3 geformt ist. Die Querschnittsfläche der Büchse 39, F₃₉ verjüngt sich in Richtung der Zentralachse A im wesentlichen kegelförmig von einer Büchsenöffnung 41 gegen den Boden 43 der Büchse 39 und definiert einen Hohlraum, der im geometrischen Sinne zum Körper des Behältnisses 3 im wesentlichen ähnlich ist, derart dass, wenn ein zu prüfendes Behältnis 3 eingelegt wird, zwischen dessen Wandung und der Wandung der Büchse 39 im wesentlichen konstante Abstandsverhältnisse herrschen. Im Oeffnungsbereich 41 der Büchse 39 ist vorzugsweise eine Positionierungskreisrinne für einen bei derartigen Behältnissen üblicherweise vorgesehenen, vorspringenden Rand mit der Deckfolienverschweissung vorgesehen (nicht dargestellt).

Die Prüfkammer umfasst im weiteren einen Verschlussdeckel 45, der getrieben, wie mit dem Doppelpfeil P dargestellt, der Büchse 39 zuführbar bzw. von letzterer wegholbar ist, um mittels Dichtungsorganen 43 die Prüfkammer dichtend zu verschliessen.

Am Boden der Büchse 39 ist ein axial getrieben verschiebbarer Kolben 47 angeordnet, welcher bei Einlegen eines Behältnisses 3 und während seiner Prüfung in der gezeigten Stellung rückgeholt ist und darnach, nach Oeffnen des Verschlussdeckels 45, ausgefahren wird, um das eben geprüfte Behältnis 3 auszustossen.

An der dem Innenraum der Prüfkammer abgekehrten Seite des Kolbens 47 mündet eine Spülmittel-Abflussleitung 49 ein, die bei, wie gezeigt, rückgeholtem Kolben 47 mittels Dichtungsorganen 51 dichtend verschlossen wird. Damit ist die Möglichkeit geschaffen, nach Entfernen eines geprüften Behältnisses 3, das, leckend, Füllgut in die Prüfkammer während der Druckprüfung ausgegeben hat, und nach Ausfahren des Kolbens 47, die Kammer zu spülen, wobei das Spülmittel aus der dann geöffneten Spülmittelabflussleitung 49 ausfliesst. Für das Spülen der Prüfkammer kann allenfalls am Verschlussdeckel 45 eine Zuführleitung, allenfalls mit Düse, für Spülmittel vorgesehen werden (nicht dargestellt).

Bevorzugterweise, und insbesondere in der Anwendung mit Behältnissen, welche mittels einer Abdeckfolie 7 verschlossen sind, wie für Joghurtbecher etc., wird die Prüfkammer räumlich so angeordnet, dass ihre Oeffnung 41 oben liegt. Dadurch wird verhindert, dass Füllgut im Behältnis 3 auf die Deckfolie absinkt, was eine Dichteprüfung auch der Verbindungsnaht, beispielsweise Schweissnaht, zwischen Deckfolie 7 und Behältniswandung beeinträchtigen würde.

Die Prüfkammer gemäss Fig. 3 umfasst, wie wiederum schematisch dargestellt ist, Druckzufuhr- und Registrierungsleitungen bzw. Organe, wie sie gemäss Fig. 1 und 2 erläutert wurden.

Für die Dichteprüfung von Behältnissen, wie beispielsweise Joghurt, Rahm etc. in Linie mit der Produktion, d.h. nach Füllen der Behältnisse und deren Verschluss, wobei jedes Behältnis geprüft wird, werden mehrere der beispielsweise in Fig. 3 schematisch dargestellten Prüfkammern zu einer Prüfanlage zusammengefasst, beispielsweise auf einem vorzugsweise horizontalen, um eine vertikale Achse sich drehenden Karusselltisch (nicht dargestellt), so dass in Linie mit der Produktion und bevor die gefüllten und verschlossenen Behältnisse für einen nachmaligen Versand abgestapelt werden, alle Behältnisse der Dichteprüfung in einer erfindungsgemässen Prüfkammer unterzogen werden.

## Patentansprüche

1. Prüfkammer für die zerstörungsfreie Dichtheitsprüfung eines Behältnisses mit sich in einer Behältnisachsrichtung verkleinernder Aussen-Querschnittsfläche, wobei die Prüfkammer einen verschliessbaren Hohlraum zur Aufnahme des Behältnisses aufweist, der an eine Evakuiereinrichtung zur Erstellung einer Druckdifferenz, als Anfangsbedingung, zwischen Behältnisinnerem und dem zwischen Hohlraumwandung und Behältnis gebildeten Behältnisaussenraum angeschlossen ist sowie an eine Druckmesseinrichtung zur Messung einer von der Druckdifferenz und der Behältnisdichtheit abhängigen Druckgrösse, dadurch gekennzeichnet, dass in den Hohlraum eine dichtend verschliessbare Spülmittel-Ablaufleitung einmündet.

2. Prüfkammer nach Anspruch 1, dadurch gekennzeichnet, dass die Leitung mittels eines Kolbens öffenbar und dichtend verschliessbar ist, der vorzugsweise auch als Behältnisauswurfkolben wirkt.

3. Prüfkammer nach Anspruch 2, dadurch gekennzeichnet, dass der Hohlraumboden einen Teller des Kolbens umfasst und die Leitung durch die dem Hohlraum abgekehrte Seite des Kolbentellers geöffnet bzw. dichtend verschlossen wird.

4. Prüfkammer nach einem der Ansprüche 1 bis 3, dadurch gekennzeichnet, dass die Kammer eine einseitig geschlossene Büchse umfasst, deren offene Querschnittsfläche sich in Richtung gegen den Büchsenboden verkleinert, und dass ein Verschlussdeckel zum dichten Verschliessen der Büchse vorgesehen ist.

5. Prüfkammer nach einem der Ansprüche 1 bis 4 für im wesentlichen kegelstumpfförmige Behältnisse, dadurch gekennzeichnet, dass die Büchse im wesentlichen kegelstumpfförmig ist.

6. Prüfkammer nach einem der Ansprüche 1 bis 5, dadurch gekennzeichnet, dass sie räumlich so angeordnet ist, dass ihre Oeffnung oben liegt.

7. Anordnung mit einer Mehrzahl von Prüfkammern nach einem der Ansprüche 1 bis 6 zur in-line-Prüfung der Behältnisse in der Produktion nach deren Verschliessen.

8. Anordnung nach Anspruch 7, dadurch gekennzeichnet, dass die Prüfkammern auf einem Karussell angeordnet sind.

9. Anwendung der Prüfkammer nach einem der Ansprüche 1 bis bis 6 oder der Anordnung nach einem der Ansprüche 7 oder 8 für die Prüfung gefüllter, verschlossener Kunststoffbecher, wie von Joghurtbechern.

## Claims

1. A test chamber for the non-destructive leak testing of a vessel with an external cross-sectional surface which decreases in one axial direction of the vessel, the test chamber having a closable cavity for receiving the vessel, which cavity is connected to an evacuation means for producing a pressure difference, as initial condition, between the interior of the vessel and the outer space of the vessel formed between the walls of the cavity and the vessel, and also to a pressure measurement means for measuring a pressure variable which is dependent on the pressure difference and the tightness of the vessel, characterised in that a discharge line for a rinsing agent which can be sealed closed opens into the cavity.

2. A test chamber according to Claim 1, characterised in that the line can be opened and sealed closed by means of a piston, which preferably also acts as a vessel-ejecting piston.

3. A test chamber according to Claim 2, characterised in that the base of the cavity comprises a plate of the piston and the line is opened or sealed closed by the side of the piston plate remote from the cavity.

4. A test chamber according to one of Claims 1 to 3, characterised in that the chamber comprises a bush closed on one side, the open cross-sectional surface area of which decreases towards the base of the bush, and that a closing cover for sealing the bush closed is provided.

5. A test chamber according to one of Claims 1 to 4 for vessels substantially in the shape of a truncated cone, characterised in that the bush is substantially in the shape of a truncated cone.

6. A test chamber according to one of Claims 1 to 5, characterised in that it is spatially arranged such that the opening thereof lies at the top.

7. An arrangement with a plurality of test chambers according to one of Claims 1 to 6 for the in-line testing of the vessels in production once they have been sealed.

8. An arrangement according to Claim 7, characterised in that the test chambers are arranged on a carousel.

9. The use of the test chambers according to one of Claims 1 to 6 or of the arrangement according to one of Claims 7 or 8 for the testing of filled, closed plastics beakers, such as yoghurt beakers.

## Revendications

1. Chambre de test pour tester sans destruction l'étanchéité d'un récipient présentant une surface de section transversale extérieure qui va en diminuant dans un sens axial du récipient, étant précisé que la chambre de test comporte, pour recevoir le récipient, une cavité apte à être fermée qui est raccordée à un dispositif pour faire le vide destiné à établir une différence de pression, comme condition initiale, entre l'intérieur du récipient et l'espace extérieur du récipient défini entre la paroi de la cavité et le récipient, et à un dispositif de mesure de pression destiné à mesurer une grandeur de pression qui est fonction de la différence de pression et de l'étanchéité du récipient, caractérisée en ce qu'une conduite d'écoulement d'agent de lavage apte à être fermée de façon étanche débouche dans la cavité.

2. Chambre de test selon la revendication 1, caractérisée en ce que la conduite est apte à être ouverte et fermée de façon étanche à l'aide d'un piston qui agit de préférence comme un piston d'éjection de récipient.

3. Chambre de test selon la revendication 2, caractérisée en ce que le fond de la cavité couvre un plateau du piston et la conduite est ouverte et fermée de façon étanche par le côté du plateau de piston opposé à la cavité.

4. Chambre de test selon l'une des revendications 1 à 3, caractérisée en ce que la chambre comporte une boîte fermée d'un côté, dont la surface de section transversale ouverte va en diminuant en direction du fond de la boîte, et en ce qu'il est prévu un couvercle de fermeture pour fermer la boîte de façon étanche.

5. Chambre de test selon l'une des revendications 1 à 4 pour des récipients globalement tronconiques, caractérisée en ce que la boîte est globalement tronconique.

6. Chambre de test selon l'une des revendications 1 à 5, caractérisée en ce qu'elle est disposée dans l'espace pour que son ouverture se trouve en haut.

7. Agencement comprenant plusieurs chambres de test selon l'une des revendications 1 à 6, pour tester en ligne des récipients une fois fermés, lors de la production.

8. Agencement selon la revendication 7, caractérisé en ce que les chambres de test sont disposées sur un carrousel.

9. Utilisation de la chambre de test selon l'une des revendications 1 à 6 ou de l'agencement selon la revendication 7 ou 8 pour tester des pots en matière plastique remplis et fermés tels que des pots de yaourt.
